Europäisches Patentamt

European Patent Office

Office européen des brevets

(11) Numéro de publication: **0 465 751 A1**

## DEMANDE DE BREVET EUROPEEN

(21) Numéro de dépôt: 90500042.8

(22) Date de dépôt: 17.04.90

(51) Int. Cl.5: **B29C 33/00**, B29C 33/30, B29C 43/10

(43) Date de publication de la demande:
15.01.92 Bulletin 92/03

(84) Etats contractants désignés:
AT BE CH DE FR GB GR IT LI LU NL SE

(71) Demandeur: **TALLERES ESPI E HIJOS, S.L.**
**Barrio de los Llanos s/n**
**E-50180 Utebo (Zaragoza)(ES)**

(72) Inventeur: **Espinosa Castro, Alejandro D.**
**c/o Talleres Espi e Hijos,S.L Barrio de los**
**Llanos**
**50180 Utebo (Zaragoza)(ES)**

(74) Mandataire: **De la Fuente Fernandez, Dionisio**
**Europatent, S.A. Santa Engracia num. 4-5**
**E-28010 Madrid(ES)**

(54) **Outil formateur d'ailettes ou de spires pour des convoyeurs à bande sans fin.**

(57) Outil formateur d'ailettes ou de spires pour transporteurs sans fin, faconné par une piéce (1) á laquelle sont integrées deux profils (2,3) allongés pourvus d'une pluralite d'orifices (5) pour support de deux réglettes dans les positions étant nécesaires confórmement aux besions du travail á effectuer. Ces réglettes sont fixées par une vis de serrage dAns la positión choisie, au bord inférieur de l'ensemble de la piéce, la vis étant pourvue de herses (7) d'appui sur la surface sur laquelle elle doit être montéeo

Sur cette piéce principale, un deuxiéme corps (4) s' appuie á travers duquel l'accouplement de l'outil á la presse devant fournir le mouvement d'ensemble.

EP 0 465 751 A1

Fig. 1

Dans ce rapport il est décrit un outil formateur d'ailettes ou de spires pour des convoyeurs à bande sans fin, lequel apporte des avantages fonctionnels remarquables de tout ordre en ce qui concerne d'autres appareils et dispositifs actuellement connus ayant le même objet, et il mérite donc le privilège d'exploitation industrielle en exclusive qu'il est demandé pour lui, en vertu du droit reconnu dans l'article 171 du Statut-Loi de Propriété Industrielle en vigueur.

Il faut signaler comme caractéristique très importante de cet objet la simplicité de construction et le maniement simple permettant d'obtenir les spires manuellement bien facilement et avec précision, tout en ayant un résultat excellent en ce qui concerne les caractéristiques techniques et économiques du travail, étant donné l'amélioration sensible dans ce dernier aspect en raison de la diminution des coûts de fabrication.

Essentiellement, l'outil de l'invention sera constitué par deux platines à position variable et réglable entre elles, sur lesquelles sont couplées deux réglettes, par l'intermédiaire desquelles et conformément à la position qu'elles prennent respectivement, on obtient le moulage de la pièce, avec les courbures appropriées le tout à l'aide d'une presse, de pied de préférence, dans laquelle l'outil est couplé convenablement.

Pour sa compréhension plus aisée, la description sera illustrée par une feuille à dessins dans laquelle on représente un exemple d'exécution préféré n'ayant aucun caractère limitatif, seulement illustratif, et qui pourra être donc l'objet de modifications de détail dans tout ce qui ne change pas essentiellement son propre but caractéristique.

Sur les dessins:

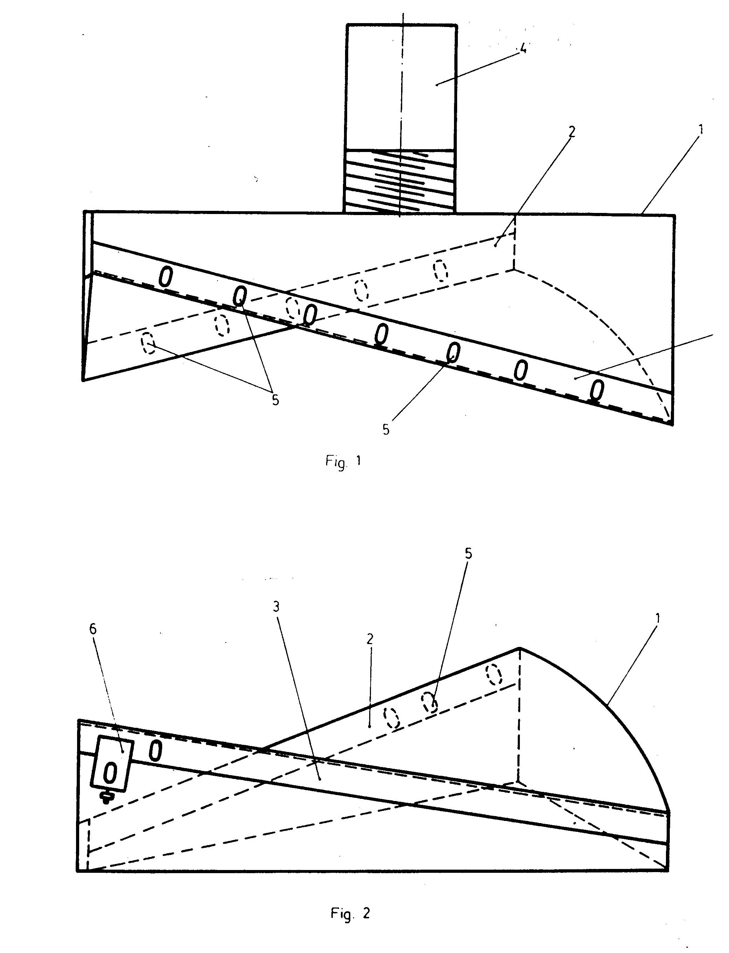

La Figure 1 montre la projection verticale et d'ensemble de l'outil étant l'objet de cette demande de Modèle Déposé.

La Figure 2 montre en détail la disposition des réglettes formatrices de l'outil lui-même représenté dans la figure précédente.

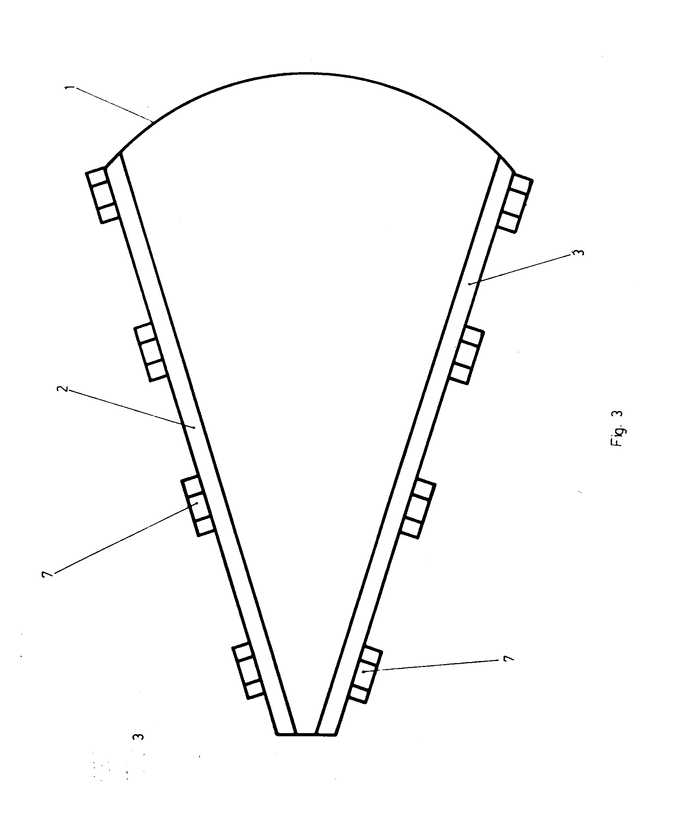

La Figure 3 c'est une vue en plan du même dispositif représenté dans les figures 1 et 2.

En faisant référence constamment à l'exemple d'exécution représenté et aux références numériques établies pour désigner les différentes parties et éléments constituant l'ensemble, l'outil objet de ce modèle déposé est constitué par un corps -1- comportant la disposition des profils -2 et 3-, pourvus dans leur longueur d'une pluralité d'orifices -5- à travers desquels deux réglettes formatrices y sont couplés.

Cette disposition présente la particularité que les profils et, par conséquent, les réglettes qu'ils supportent, peuvent prendre entre eux multiples positions, en raison des besoins de réalisation ou les exigences du travail à effectuer, à l'objet de pouvoir doter la pièce en fabrication de la courbure idéale ou convenable.

La position relative des réglettes est réglée par la pièce -6-comportant une vis de serrage afin d'obtenir la fixation de la position nécessaire pour la réalisation du travail.

Sur le bord inférieur de l'outil, dans ses deux côtés il y a des herses -7- pour l'appui sur la surface sur il doit être placé.

A un corps -1- de l'outil s'unit par la partie supérieure un deuxième corps -4-, élevé en hauteur, dont la fonction est de rendre possible le couplage de l'ensemble de la presse, avec laquelle on obtient le moulage. Ce deuxième corps -4- a un profil de préférence quadrangulaire et les supports inférieur et supérieurs plats.

Décrit suffisamment l'objet constituant ce Modèle Déposé il ne reste qu'ajouter que dans sa réalisation pourront être introduites toutes ces modifications de détail ne changeant pas le caractère essentiel, pouvant toucher des changements de forme, matière utilisée dans la fabrication, proportions, dimensions, etc. et en général toutes les modifications ayant un caractère accessoire ou complémentaire devant être incluses dans la protection demandeé.

## Revendications

1. OUTIL FORMATEUR D'AILETTES OU DE SPIRES POUR DES CONVOYEURS A BANDE SANS FIN, constitué par un corps de formage approprié, dans lequel sont intégrés deux profils allongés servant de support à deux réglettes par l'intemédiaires desquelles on obtient le moulage des pièces; ces réglettes sont susceptibles de prendre des multiples positions, en raison des besoins ou des exigences du travail á effectuer.

2. OUTIL FORMATEUR D'AILETTES OU DE SPIRES POUR DES CONVOYEURS A BANDE SANS FIN, suivant la 1ère. revendication, caractérisé par la prévoyance dans le corps de l'outil d'une pièce pourvue d'une vis de serrage par l'intermédiaire de laquelle on obtient et on fixe dans chacun des cas la position relative des deux réglettes entre elles.

3. OUTIL FORMATEUR D'AILETTES OU DE SPIRES POUR DES CONVOYEURS A BANDE SANS FIN, suivant les revendications 1 et 2, caractérisé parce que le bord inférieur du corps est pourvu de quelques herses d'appui sur la surface où il doit être placé.

4. OUTIL FORMATEUR D'AILETTES OU DE SPIRES POUR DES CONVOYEURS A BANDE SANS FIN, suivant les revendications 1 à 3, caractérisé parce que sur le corps de l'outil un deuxième corps est appuyé, à profil rectangulaire, de préférence, et les supports supérieurs et inférieurs plats, par l'intermédiaire duquel s'effectue le couplage de l'outil à la presse devant fournir son actionnement.

5. OUTIL FORMATEUR D'AILETTES OU DE SPIRES POUR DES CONVOYEURS A BANDE SANS FIN.

Tel que décrit et revendiqué dans le présent rapport descriptif comprenant 4 feuilles foliées et dactylographiées d'un seul côté et d'un plan double l'illustrant.

Fig. 1

Fig. 2

Fig. 3

**Office européen des brevets**

# RAPPORT DE RECHERCHE EUROPEENNE

Numéro de la demande

## EP 90 50 0042

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 279 905 (MAIER) <br> * page 1, ligne 10 - ligne 36 * * page 10, ligne 3 - page 11, ligne 5; figures 7,8 * <br> – – – | 1-5 | B 29 C 33/00 <br> B 29 C 33/30 <br> B 29 C 43/10 |
| A | US-A-3 889 513 (IWASAKI) <br> – – – | | |
| A | EP-A-0 029 912 (MESSERSCHMITT) <br> – – – | | |
| A | US-A-3 618 886 (GRAHAM) <br> – – – | | |
| A | US-A-4 390 156 (MEYER ET AL.) <br> – – – | | |
| A | US-A-3 702 130 (FRAENZKE) <br> – – – – – | | |

**DOMAINES TECHNIQUES RECHERCHES (Int. Cl.5)**

B 29 C
B 28 B
B 65 G
B 27 N
E 04 G
B 21 D
D 21 H

Le présent rapport de recherche a été établi pour toutes les revendications

| Lieu de la recherche | Date d'achèvement de la recherche | Examinateur |
|---|---|---|
| La Haye | 23 juillet 91 | SOEDERBERG J.-E. |